# EUROPEAN PATENT SPECIFICATION

(11) **EP 4 091 030 B1**
(45) Date of publication and mention of the grant of the patent: **10.04.2024**
(21) Application number: 20701161.0
(22) Date of filing: 15.01.2020
(51) Int. Cl.: G05G 1/30, G05G 1/60, B60T 7/04, G05G 1/38, G05G 5/03, B60K 26/02

(54) **ON-DEMAND DRIVING CONTROL SYSTEM WITH ON-DEMAND DRIVING PEDAL**
BEDARFSABHÄNGIGES FAHRZSYSTEM MIT ON-DEMAND-FAHRPEDAL
SYSTÈME DE COMMANDE DE CONDUITE À LA DEMANDE AVEC PÉDALE D'ENTRAÎNEMENT À LA DEMANDE

(43) Date of publication of application: 23.11.2022
(73) Proprietor: Toyota Motor Europe, 1140 Brussels (BE)
(72) Inventor: BADOIL, Aurélien, 1140 BRUSSELS (BE)
(74) Representative: Cabinet Beau de Loménie
(86) International application number: PCT/EP2020/050878
(87) International publication number: WO 2021/144015

(56) References cited:
- WO-A1-2019/048403
- DE-A1-102017 220 826
- US-A1- 2007 152 974

## Description

### TECHNICAL FIELD

The present disclosure is related to on-demand control system for an automotive vehicle, and more particularly to on-demand driving pedals, for example for an automated vehicle.

### BACKGROUND

Driving pedals are known. Such pedals may be clutch, brake and/or throttle pedals that may hang from the bulkhead or stand from the floor of the vehicle.

As automated vehicle are developed which do not require the driver to perform all the driving tasks, the interior space requirement of the cockpit of the vehicle may be made more comfortable for the driver and the passengers. WO2019/048403 relates to a vehicle with footrest and actuation element and DE102017220826 relates to a control element for a vehicle.

### SUMMARY

Therefore, according to embodiments of the present disclosure, an on-demand control system for an automated vehicle is provided. The on-demand control system for an automated vehicle may include an on-demand driving pedal and a control unit for controlling the on-demand driving pedal, the on-demand driving pedal including an actuator including an electro-active polymer and a stretch sensor, the control unit being configured to shape the on-demand driving pedal, the control unit being configured to collect information from the stretch sensor to send driving commands to the vehicle allowing driving control of the vehicle by a user through interaction of the user with the on-demand driving pedal and to retract the on-demand driving pedal.

By providing such a configuration, it is possible to provide a shape changing surface without the involvement of a mechanical, inflatable and/or hydraulic mechanism. The shape changing surface, i.e., the on-demand driving pedal, allows a seamless integration of driving pedals and complex interactions between the user and the automated vehicle. The electro-active polymer actuator allows for actuating, i.e., shaping the on-demand driving pedal, and the stretch sensor allows for sensing the deformation applied by the user.

Non-limiting examples of electro-active polymer may include dielectric elastomers, for example silicone based dielectric elastomers, ionic electroactive polymer (metal composite), twist polymer coils, for example polyamide or polyethylene fibres, ferrofluid, piezoelectric polymers, for example PVDF, shape memory polymers, for example shape memory polymers including polyurethane and polyetherester.

The shape of the on-demand driving pedals may be obtained by combination of different electro-active polymer layers acting like tendons and/or electro-active polymer patterns that may fold the surface like an origami.

According to some embodiments, the actuator and the sensor may be sandwiched between two stretch fabric layers.

According to some embodiments, the stretch sensor may be made of electro-active polymer.

According to some embodiments, the control unit may be configured to control the actuator to send complex feedback information to the user when the user is interacting with the on-demand driving pedal.

According to some embodiments, the system may send complex feedback information to the user, the complex feedback information involving several levels of feedback.

Levels of feedback may be linked to the two types of feedback: force feedback, which may involve several sensitivity of force giving the feeling of soft/medium/hard resistance and haptic feedback (vibrations).

According to some embodiments, the complex feedback information may include force feedback and/or haptic feedback.

Force feedback may include the simulation of mechanical resistance to the force applied by the user. User should get the feeling of touching something and the force feedback may allow the user to apply a force proportionated to the desired result, for example acceleration and/or braking.

The haptic feedback provided through the pedals may be related to specific features such as reaching the speed limit information or setting up cruise control information that may be communicated through vibration coming from the pedals.

According to some embodiments, the control unit may be configured to adapt the sent complex feedback information in function of one or more predetermined parameter.

The adaptation of the sent complex feedback may be related to the level of force feedback applied. The driving mode (sport, ECO...) may determine the resistance (soft, medium, hard) and give different feelings to the driver.

According to some embodiments, the control unit is configured to adapt the sent driving commands in function of one or more predetermined parameter.

The sent driving commands may be predetermined by the automation level, allowing driver to control the driving commands or not, the driving mode selected by the driver and other driving dynamics parameters such as road conditions.

According to some embodiments, the one or more predetermined parameter may include contextualized driving dynamic parameters, selected driving mode and/or user's preference.

Non-limiting examples of contextualized driving dynamic parameters for the complex feedback information may include selected driving modes, safety features such as pre-collision system, relative speed warning, adaptive cruise control, and external parameters detected by car sensors such as road surface (type of road), road condition (dry, wet).

Non-limiting examples of contextualized driving dynamic parameters for the sent driving commands may include selected driving modes, safety features such as pre-collision system, relative speed warning, adaptive cruise control, and external parameters detected by car sensors such as road surface (type of road), road condition (dry, wet).

Non-limiting examples of user's preference may include the location of the on-demand driving pedals, inclination of the on-demand driving pedals, height of the on-demand driving pedals, distance between two on-demand pedals, and/or length of the on-demand driving pedals.

According to embodiments of the present disclosure, an automated vehicle is provided. The automated vehicle may include a car interior having a floor, the floor including an above-defined on-demand control system.

According to some embodiments, the floor may include a plurality of on-demand driving pedal.

According to embodiments of the present disclosure, a method of operating an above-defined automated vehicle is provided. The method may include:
- during automated driving mode when a user driving control is requested or when a user wants to take driving control of the vehicle, the control unit shapes the on-demand driving pedal by applying a first voltage to the actuator,
- the vehicle exits the automated driving mode;
- the user interacts with the on-demand driving pedal by applying a deformation to the stretch sensor;
- the control unit collects information from the stretch sensor to send driving commands to the vehicle;
- when the user driving control is no longer requested or when the user does not want to have driving control of the vehicle, the vehicle enters the automated driving mode; and
- the control unit retracts the on-demand driving pedal by applying a second voltage to the actuator.

According to some embodiments, the control unit may control the actuator to send complex feedback information to the user when the user is interacting with the on-demand driving pedal.

According to some embodiments, the control unit may adapt the sent complex feedback information in function of one or more predetermined parameter.

According to some embodiments, the control unit may adapt the sent driving commands in function of one or more predetermined parameter.

According to some embodiments, the one or more predetermined parameter may include contextualized driving dynamic parameters, selected driving mode and/or user's preferences.

According to some embodiments, the control unit may control the location of the on-demand driving pedal, based on a user's preference.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, serve to explain the principles thereof.

### BRIEF DESCRIPTION OF THE DRAWINGS

Fig. 1 shows a partial representation of an exemplary car interior of an automated vehicle according to embodiments of the present disclosure;
Fig. 2 shows an enlargement of the floor of Fig. 1 when the on-demand driving pedal is retracted;
Fig. 3 shows an enlargement of the floor of Fig. 1 when the on-demand driving pedal is shaped;
Fig. 4 shows locations of the on-demand pedal on the floor;
Fig. 5A shows an exploded view of exemplary layers forming the on-demand pedal according to embodiments of the present disclosure;
Fig. 5B shows an exploded view of exemplary layers forming the on-demand pedal according to other embodiments of the present disclosure;
Figs. 6-9 show exemplary on-demand control system for an automated vehicle according to embodiments of the present disclosure; and
Fig. 10 shows a flow chart of the method according to embodiments of the present disclosure.

### DETAILED DESCRIPTION

Reference will now be made in detail to exemplary embodiments of the disclosure, examples of which are illustrated in the accompanying drawings. Wherever possible, the same reference numbers will be used throughout the drawings to refer to the same or like parts.

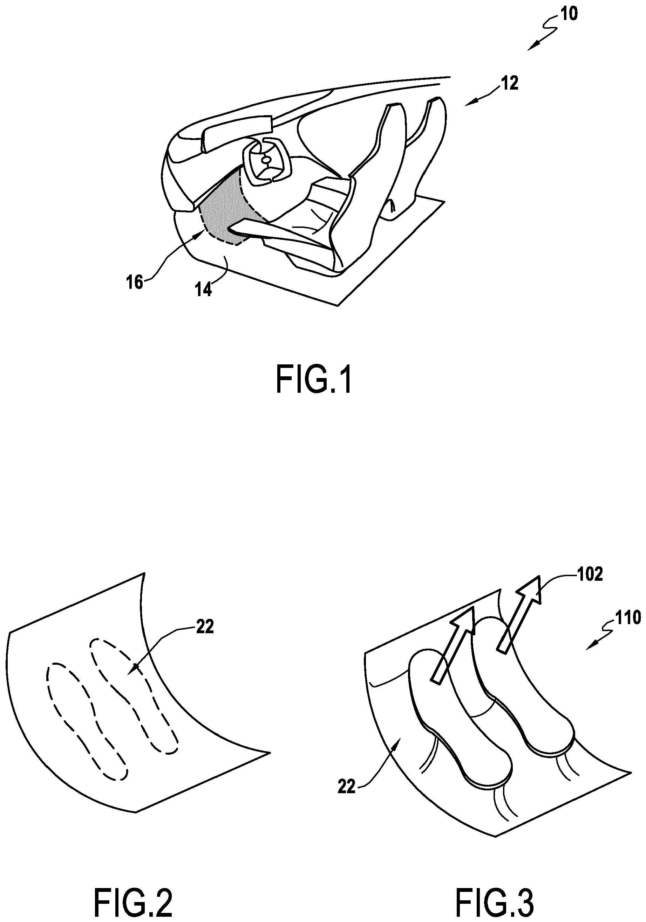

Fig. 1 shows a partial representation of an exemplary automated vehicle 10. Fig. 1 shows in particular a partial representation of an exemplary car interior 12 of an automated vehicle 10.

The automated vehicle 10 may be an automated car level 3 and/or 4.

The car interior 12 may include a floor 14. The floor 14 may include an on-demand control system 16.

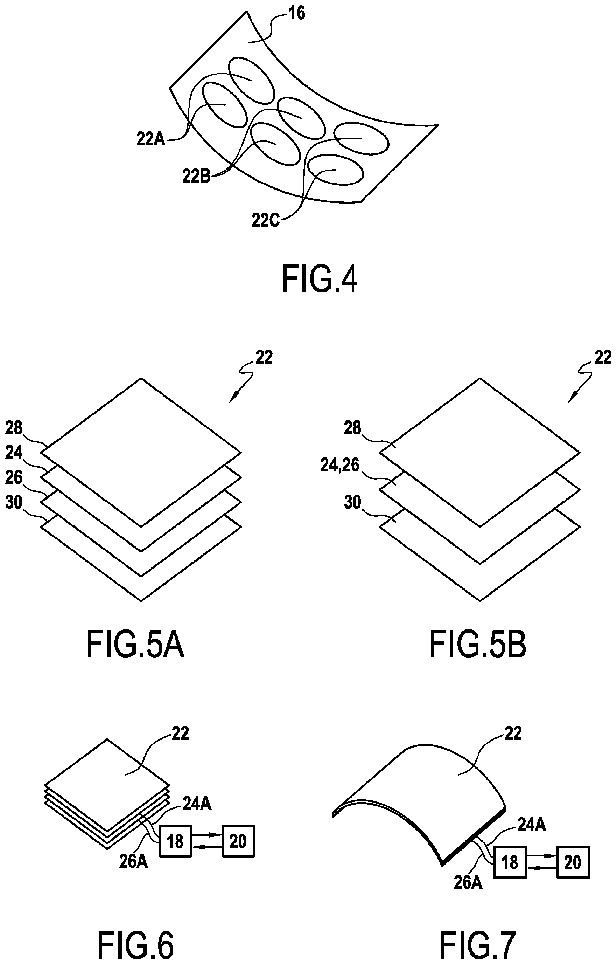

As shown in Figs. 6, the on-demand control system 16 may include a control unit 18. The control unit 18 may receive information from and send information to a vehicle system 20 that may control the automated vehicle 10. As shown in Fig. 3, the on-demand control system 16 may include an on-demand driving pedal 22, shown in the shaped configuration in Fig. 3 and in the retracted configuration in Fig. 2, i.e., the on-demand driving pedals 22 may be hidden in the floor 14.

As a non-limiting example, the on-demand control system 16 may include two on-demand driving pedals 22.

As a non-limiting example, the on-demand control system 16 may include a plurality of on-demand driving pedals 22A-22C. As shown in Fig. 4, the on-demand control system 16 may include three pair of on-demand driving pedals 22A-22C, located on the floor 14. Depending on user's preference, the two on-demand driving pedals 22A may be shaped, or the two on-demand driving pedals 22B, or the two on-demand driving pedals 22C.

As non-limiting examples, user's preference may include location of the on-demand driving pedals 22, inclination of the on-demand driving pedals 22, height of the on-demand driving pedals 22, distance between two on-demand driving pedals 22 and/or length of the on-demand driving pedals 22.

As shown in Fig. 5A, the on-demand driving pedal 22 may include an actuator 24 made of electro-active polymer and a stretch sensor 26. The actuator 24 and the stretch sensor 26 may be sandwiched between two stretch fabric layers 28, 30. It is understood that the number of stretch fabric layers is not limited to two layers.

The stretch sensor 26 may be made of electro-active polymer.

As shown in Fig. 5B, the on-demand driving pedal 22 may include an actuator 24 made of electro-active polymer and a stretch sensor 26 made of electro-active polymer, the actuator 24 and the stretch sensor 26 not being distinct from one another. The actuator 24/stretch sensor 26 may be sandwiched between two stretch fabric layers 28, 30.

As shown in Fig. 6, the control unit may receive information from the on-demand driving pedal 22, specifically from the stretch sensor 26, through connection 26A and send information to the on-demand driving pedal 22, specifically to the actuator 24, through connection 24A. Figs. 7-9 show different deformation that may be contemplated with such an actuator 24.

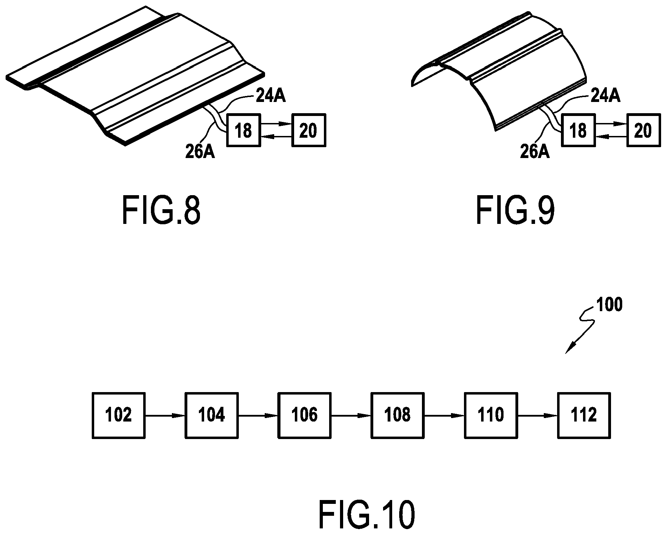

Fig. 10 shows a flow chart of a method 100 of operating the automated vehicle 10 according to embodiments of the present disclosure.

The method 100 may include a step 102 wherein, during automated driving mode, when a user driving control is requested or when a user wants to take driving control of the vehicle 10, the control unit 18 shapes the on-demand driving pedal 22 by applying a first voltage to the actuator 24.

The method 100 may include a step 104 wherein, the vehicle 10 exits the automated driving mode.

The method 100 may include a step 106 wherein, the user interacts with the on-demand driving pedal 22 by applying a deformation to the stretch sensor 26.

The method 100 may include a step 108 wherein, the control unit 18 collects information from the stretch sensor 26 to send driving commands to the vehicle 10, for example through the vehicle system 20.

The method 100 may include a step 110 wherein, when the user driving control is no longer requested or when the user does not want to have driving control of the vehicle 10, the vehicle 10 enters the automated driving mode.

The method 100 may include a step 112 wherein, the control unit 18 retracts the on-demand driving pedal 22 by applying a second voltage to the actuator 24.

The control unit 18 may control the actuator 24 to send complex feedback information to the user when the user is interacting with the on-demand driving pedal 22.

The control unit 18 may adapt the sent complex feedback information in function of one or more predetermined parameter.

The feedback may be proportionate and programmable with the control unit 18 controlling the actuator 24.

The control unit 18 may adapt the sent driving commands in function of one or more predetermined parameter.

The one or more predetermined parameter may include contextualized driving dynamic parameters, selected driving mode and/or user's preferences.

The control unit 18 may control the location of the on-demand driving pedal, based on a user's preference.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Where any standards of national, international, or other standards body are referenced (e.g., ISO, etc.), such references are intended to refer to the standard as defined by the national or international standards body as of the priority date of the present specification. Any subsequent substantive changes to such standards are not intended to modify the scope and/or definitions of the present disclosure and/or claims.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. An on-demand control system (16) for an automated vehicle (10), the system (16) comprising an on-demand driving pedal (22) and a control unit (18) for controlling the on-demand driving pedal (22), the on-demand driving pedal (22) comprising an actuator (24) comprising an electro-active polymer and a stretch sensor (26), the control unit (18) being configured to shape the on-demand driving pedal (22), the control unit (18) being configured to collect information from the stretch sensor (26) to send driving commands to the vehicle (10) allowing driving control of the vehicle (10) by a user through interaction of the user with the on-demand driving pedal (22) and to retract the on-demand driving pedal (22).

2. The system (16) according to claim 1, wherein the actuator (24) and the sensor (26) are sandwiched between two stretch fabric layers (28, 30).

3. The system (16) according to claim 1 or 2, wherein the stretch sensor (26) is made of electro-active polymer.

4. The system (16) according to any of claim 1-3, wherein the control unit (18) is configured to control the actuator (24) to send complex feedback information to the user when the user is interacting with the on-demand driving pedal (22).

5. The system (16) according to claim 4, wherein the complex feedback information comprises force feedback and/or haptic feedback.

6. The system (16) according to claim 4 or 5, wherein the control unit (18) is configured to adapt the sent complex feedback information in function of one or more predetermined parameter.

7. The system (16) according to any of claims 1-6, wherein the control unit (18) is configured to adapt the sent driving commands in function of one or more predetermined parameter.

8. The system (16) according to claim 6 or 7, wherein the one or more predetermined parameter comprises contextualized driving dynamic parameters, selected driving mode and/or user's preferences.

9. An automated vehicle (10) comprising a car interior (12) having a floor (14), the floor (14) comprising an on-demand control system (16) according to any of claims 1-8.

10. The automated vehicle (10) according to claim 9, wherein the floor (14) comprises a plurality of on-demand driving pedal (22).

11. A method (100) of operating an automated vehicle (10) according to claim 9 or 10, the method (100) comprising:
- during automated driving mode when a user driving control is requested or when a user wants to take driving control of the vehicle (10), the control unit (18) shapes (102) the on-demand driving pedal (22) by applying a first voltage to the actuator (24),
- the vehicle (10) exits (104) the automated driving mode;
- the user interacts (106) with the on-demand driving pedal (22) by applying a deformation to the stretch sensor (26);
- the control unit (18) collects (108) information from the stretch sensor (26) to send driving commands to the vehicle (10);
- when the user driving control is no longer requested or when the user does not want to have driving control of the vehicle (10), the vehicle (10) enters (110) the automated driving mode; and
- the control unit (18) retracts (112) the on-demand driving pedal (22) by applying a second voltage to the actuator (24).

12. The method (100) according to claim 11, wherein the control unit (18) controls the actuator (24) to send complex feedback information to the user when the user is interacting with the on-demand driving pedal (22).

13. The method (100) according to claim 12, wherein the control unit (18) adapts the sent complex feedback information in function of one or more predetermined parameter.

14. The method (100) according to any of claims 11-13, wherein the control units (18) adapts the sent driving commands in function of one or more predetermined parameter.

15. The method (100) according to claim 13 or 14, wherein the one or more predetermined parameter comprises contextualized driving dynamic parameters, selected driving mode and/or user's preferences.

16. The method (100) according to any of claims 11-15, wherein the control unit (18) controls the location of the on-demand driving pedal (22), based on a user's preference.

## Patentansprüche

1. Bedarfsabhängiges Steuersystem (16) für ein automatisiertes Fahrzeug (10), wobei das System (16) ein bedarfsabhängiges Fahrpedal (22) und eine Steuereinheit (18) zum Steuern des bedarfsabhängigen Fahrpedals (22) umfasst, wobei das bedarfsabhängige Fahrpedal (22) einen Aktor (24) umfasst, der ein elektroaktives Polymer und einen Dehnungssensor (26) umfasst, wobei die Steuereinheit (18) dazu ausgestaltet ist, das bedarfsabhängige Fahrpedal (22) zu formen, wobei die Steuereinheit (18) dazu ausgestaltet ist, Informationen von dem Dehnungssensor (26) zu sammeln, um Fahrbefehle an das Fahrzeug (10) zu senden, welche die Fahrsteuerung des Fahrzeugs (10) durch einen Benutzer durch Interaktion des Benutzers mit dem bedarfsabhängigen Fahrpedal (22) ermöglichen, und das bedarfsabhängige Fahrpedal (22) einzuziehen.

2. System (16) nach Anspruch 1, wobei der Aktor (24) und der Sensor (26) zwischen zwei Dehngewebeschichten (28, 30) zwischengelegt sind.

3. System (16) nach Anspruch 1 oder 2, wobei der Dehnungssensor (26) aus elektroaktivem Polymer besteht.

4. System (16) nach einem der Ansprüche 1 bis 3, wobei die Steuereinheit (18) dazu ausgestaltet ist, den Aktor (24) zu steuern, um komplexe Rückmeldungsinformationen an den Benutzer zu senden, wenn der Benutzer mit dem bedarfsabhängigen Fahrpedal (22) interagiert.

5. System (16) nach Anspruch 4, wobei die komplexen Rückmeldungsinformationen eine Kraftrückmeldung und/oder haptische Rückmeldung umfassen.

6. System (16) nach Anspruch 4 oder 5, wobei die Steuereinheit (18) dazu ausgestaltet ist, die gesendeten komplexen Rückmeldungsinformationen in Abhängigkeit von einem oder mehreren vorbestimmten Parametern anzupassen.

7. System (16) nach einem der Ansprüche 1 bis 6, wobei die Steuereinheit (18) dazu ausgestaltet ist, die gesendeten Fahrbefehle in Abhängigkeit von einem oder mehreren vorbestimmten Parametern anzupassen.

8. System (16) nach Anspruch 6 oder 7, wobei der eine oder die mehreren vorbestimmten Parameter kontextualisierte Fahrdynamikparameter, den ausgewählten Fahrmodus und/oder Benutzerpräferenzen umfassen.

9. Automatisiertes Fahrzeug (10), das einen Fahrzeuginnenraum (12) umfasst, der einen Boden (14) aufweist, wobei der Boden (14) ein bedarfsabhängiges Steuersystem (16) nach einem der Ansprüche 1 bis 8 umfasst.

10. Automatisiertes Fahrzeug (10) nach Anspruch 9, wobei der Boden (14) mehrere bedarfsabhängige Fahrpedale (22) umfasst.

11. Verfahren (100) zum Betrieb eines automatisierten Fahrzeugs (10) nach Anspruch 9 oder 10, wobei das Verfahren (100) umfasst:
- während eines automatisierten Fahrmodus, wenn eine Benutzerfahrsteuerung angefordert wird oder wenn ein Benutzer die Fahrsteuerung des Fahrzeugs (10) übernehmen will, Formen (102) des bedarfsabhängigen Fahrpedals (22) durch die Steuereinheit (18) durch Anlegen einer ersten Spannung an den Aktor (24),
- Verlassen (104) des automatisierten Fahrmodus durch das Fahrzeug (10),
- Interagieren (106) des Benutzers mit dem bedarfsabhängigen Fahrpedal (22) durch Anwenden einer Verformung auf den Dehnungssensor (26),
- Sammeln (108) von Informationen von dem Dehnungssensor (26) durch die Steuereinheit (18), um Fahrbefehle an das Fahrzeug (10) zu senden,
- wenn die Benutzerfahrsteuerung nicht mehr angefordert wird oder wenn der Benutzer die Fahrsteuerung des Fahrzeugs (10) nicht will, Eintreten (110) in den automatisierten Fahrmodus durch das Fahrzeug (10), und
- Einziehen (112) des bedarfsabhängigen Fahrpedals (22) durch die Steuereinheit (18) durch Anlegen einer zweiten Spannung an den Aktor (24).

12. Verfahren (100) nach Anspruch 11, wobei die Steuereinheit (18) den Aktor (24) steuert, um komplexe Rückmeldungsinformationen an den Benutzer zu senden, wenn der Benutzer mit dem bedarfsabhängigen Fahrpedal (22) interagiert.

13. Verfahren (100) nach Anspruch 12, wobei die Steuereinheit (18) die gesendeten komplexen Rückmeldungsinformationen in Abhängigkeit von einem oder mehreren vorbestimmten Parametern anpasst.

14. Verfahren (100) nach einem der Ansprüche 11 bis 13, wobei die Steuereinheit (18) die gesendeten Fahrbefehle in Abhängigkeit von einem oder mehreren vorbestimmten Parametern anpasst.

15. Verfahren (100) nach Anspruch 13 oder 14, wobei der eine oder die mehreren vorbestimmten Parameter kontextualisierte Fahrdynamikparameter, den ausgewählten Fahrmodus und/oder Benutzerpräferenzen umfassen.

16. Verfahren (100) nach einem der Ansprüche 11 bis 15, wobei die Steuereinheit (18) den Ort des bedarfsabhängigen Fahrpedals (22) basierend auf einer Benutzerpräferenz steuert.

## Revendications

1. Système de commande à la demande (16) pour un véhicule automatisé (10), le système (16) comprenant une pédale de conduite à la demande (22) et une unité de commande (18) destinée à commander la pédale de conduite à la demande (22), la pédale de conduite à la demande (22) comprenant un dispositif d'actionnement (24) comprenant un polymère électro-actif et un capteur d'étirement (26), l'unité de commande (18) étant configurée pour conformer la pédale de conduite à la demande (22), l'unité de commande (18) étant configurée pour collecter de l'information provenant du capteur d'étirement (26) pour envoyer des commandes de conduite au véhicule (10) permettant une commande de conduite du véhicule (10) par un utilisateur par interaction de l'utilisateur avec la pédale de conduite à la demande (22) et pour rétracter la pédale de conduite à la demande (22).

2. Système (16) selon la revendication 1, dans lequel le dispositif d'actionnement (24) et le capteur (26) sont enserrés entre deux couches de tissu extensible (28, 30).

3. Système (16) selon la revendication 1 ou 2, dans lequel le capteur d'étirement (26) se compose de polymère électro-actif.

4. Système (16) selon l'une quelconque des revendications 1 à 3, dans lequel l'unité de commande (18) est configurée pour commander le dispositif d'actionnement (24) pour envoyer de l'information de rétroaction complexe à l'utilisateur quand l'utilisateur interagit avec la pédale de conduite à la demande (22).

5. Système (16) selon la revendication 4, dans lequel l'information de rétroaction complexe comprend une rétroaction de force et/ou une rétroaction haptique.

6. Système (16) selon la revendication 4 ou 5, dans lequel l'unité de commande (18) est configurée pour adapter l'information de rétroaction complexe envoyée en fonction d'un ou plusieurs paramètres prédéterminés.

7. Système (16) selon l'une quelconque des revendications 1 à 6, dans lequel l'unité de commande (18) est configurée pour adapter les commandes de conduite envoyées en fonction d'un ou plusieurs paramètres prédéterminés.

8. Système (16) selon la revendication 6 ou 7, dans lequel les un ou plusieurs paramètres prédéterminés comprennent des paramètres dynamiques de conduite contextualisés, un mode de conduite sélectionné et/ou des préférences d'utilisateur.

9. Véhicule automatisé (10) comprenant un intérieur de voiture (12) ayant un plancher (14), le plancher (14) comprenant un système de commande à la demande (16) selon l'une quelconque des revendications 1 à 8.

10. Véhicule automatisé (10) selon la revendication 9, dans lequel le plancher (14) comprend une pluralité de pédales de conduite à la demande (22).

11. Procédé (100) de mise en œuvre d'un véhicule automatisé (10) selon la revendication 9 ou 10, le procédé (100) comprenant :
- pendant un mode de conduite automatisé quand une commande de conduite d'utilisateur est demandée ou quand un utilisateur veut prendre une commande de conduite du véhicule (10), l'unité de commande (18) conforme (102) la pédale de conduite à la demande (22) en appliquant une première tension sur le dispositif d'actionnement (24),
- le véhicule (10) sort (104) du mode de conduite automatisé ;
- l'utilisateur interagit (106) avec la pédale de conduite à la demande (22) en appliquant une déformation sur le capteur d'étirement (26) ;
- l'unité de commande (18) collecte (108) de l'information provenant du capteur d'étirement (26) pour envoyer des commandes de conduite au véhicule (10) ;
- quand la commande de conduite d'utilisateur n'est plus demandée ou quand l'utilisateur ne veut pas avoir une commande de conduite du véhicule (10), le véhicule (10) entre (110) dans le mode de conduite automatisé ; et
- l'unité de commande (18) rétracte (112) la pédale de conduite à la demande (22) en appliquant une deuxième tension sur le dispositif d'actionnement (24).

12. Procédé (100) selon la revendication 11, selon lequel l'unité de commande (18) commande le dispositif d'actionnement (24) pour envoyer de l'information de rétroaction complexe à l'utilisateur quand l'utilisateur interagit avec la pédale de conduite à la demande (22).

13. Procédé (100) selon la revendication 12, selon lequel l'unité de commande (18) adapte l'information de rétroaction complexe envoyée en fonction d'un ou plusieurs paramètres prédéterminés.

14. Procédé (100) selon l'une quelconque des revendications 11 à 13, selon lequel l'unité de commande (18) adapte les commandes de conduite envoyées en fonction d'un ou plusieurs paramètres prédéterminés.

15. Procédé (100) selon la revendication 13 ou 14, selon lequel les un ou plusieurs paramètres prédéterminés comprennent des paramètres dynamiques de conduite contextualisés, un mode de conduite sélectionné et/ou des préférences d'utilisateur.

16. Procédé (100) selon l'une quelconque des revendications 11 à 15, selon lequel l'unité de commande (18) commande l'emplacement de la pédale de conduite à la demande (22), sur la base d'une préférence d'utilisateur.
